# EUROPEAN PATENT SPECIFICATION

(11) **EP 4 241 141 B1**
(45) Date of publication and mention of the grant of the patent: **14.02.2024**
(21) Application number: 21806214.9
(22) Date of filing: 04.11.2021
(51) Int. Cl.: G05B 19/406, G05B 19/409, G05B 19/18

(54) **CONTROL DEVICE FOR AT LEAST ONE TECHNICAL INSTALLATION, TECHNICAL INSTALLATION, USE OF A CONTROL DEVICE AND METHOD FOR CONTROLLING AT LEAST ONE TECHNICAL INSTALLATION**
BEDIENVORRICHTUNG FÜR ZUMINDEST EINE TECHNISCHE ANLAGE, TECHNISCHE ANLAGE, VERWENDUNG EINER BEDIENVORRICHTUNG UND VERFAHREN ZUM BEDIENEN ZUMINDEST EINER TECHNISCHEN ANLAGE
DISPOSITIF DE COMMANDE POUR AU MOINS UNE INSTALLATION TECHNIQUE, INSTALLATION TECHNIQUE, UTILISATION D'UN DISPOSITIF DE COMMANDE ET PROCÉDÉ DE COMMANDE D'AU MOINS UNE INSTALLATION TECHNIQUE

(30) Priority: 06.11.2020 EP 20206214
(43) Date of publication of application: 13.09.2023
(73) Proprietor: Bystronic Laser AG, 3362 Niederönz (CH)
(72) Inventor: SEIBERT, Friedemann, 66484 Winterbach/Pfalz (DE); ROEDIGER, Benjamin, 99885 Ohrdruf (DE)
(74) Representative: Patentanwälte Geyer, Fehners & Partner mbB
(86) International application number: PCT/EP2021/080624
(87) International publication number: WO 2022/096565

(56) References cited:
- EP-A1- 2 617 120
- WO-A1-2007/062441
- WO-A1-2013/189760
- WO-A1-2020/087099
- AT-B1- 501 688
- US-A1- 2020 208 989

## Description

The present invention relates to a control device for at least one technical installation, a technical installation, a use of a control device and a method for controlling at least one technical installation.

Control elements for technical installations, such as machine tools, in particular bending machines, are typically equipped with emergency stop devices that are unmistakably assigned to a technical installation. In order to ensure that only effective emergency stop devices are recognized as such, the PILZ company, in cooperation with Steute, has developed an emergency stop button that is only illuminated in the colours typical of emergency stop devices when the energy supply is available and otherwise appears in an inconspicuous grey.

To avoid incorrect operation of neighbouring machine tools or confusion of the emergency stop device, control devices of machine tools are typically wire-bound. Tablet controls are an exception, but may only be used to trigger movements that cannot impair the safety, e.g., of a machine tool operator. The wiring of the control devices is a disadvantage because the cables of the wiring must be pulled along with the control devices, are in the way or can be damaged by being run over or kinked.

DE 10 2011 083 817 A1 discloses a method for establishing a wireless connection between a communication device and a machine tool. WO2013/189760 A1 relates to a coupling system for use in automation technology, which coupling system comprises at least one first device and one second device of automation technology arranged outside the first device, wherein the first device and the second device have a corresponding interface for wirelessly transmitting data and/or energy and wherein at least one first coupling apparatus is arranged on the first device, which first coupling apparatus interacts with a second coupling apparatus of the second device, wherein the second device can be detachably fastened to the first device with the aid of the first coupling apparatus and the second coupling apparatus. AT501688 B1 relates to a method and suitable devices for the safe, systematic, exclusive, temporary assignment of the command authorisation of an operator to a controllable technical installation using a mobile control unit, which is technically suitable for the alternate operation of a plurality of controllable technical installations, is usually equipped with safety switch elements, such as an emergency stop circuit-breaker, approval switch and operating mode selection switch and which nevertheless only uses conventional data transmission elements or network technology comprising no specific safety-related features for the coupling of data to the controllable technical installation. WO2020/087099 A1 relates to a method for operating a machine control system and to a machine control system having at least one machine controller for carrying out machine operations, comprising at least one mobile hand-held operating device which can be carried by an operator and is intended to functionally influence one of the machine controllers. EP2617120 A1 relates to systems for wireless energy transfer distribution over a defined area. Energy may be distributed over the area via a plurality of repeater, source, and device resonators. The resonators within the area may be tunable and the distribution of energy or magnetic fields within the area may be configured depending on device position and power needs. A method for assigning a processing plan to a mobile unit data set of a mobile unit of an indoor location system of a manufacturing hall is provided. US2020/208989 A1 discloses a method which includes: providing a manufacturing control system for industrial processing of workpieces with a machine tool in accordance with workpiece-specific processing plans, each processing plan storing order information for a workpiece to be processed, providing a mobile unit with an image acquisition unit for acquiring image data, mobile unit data set belonging to the mobile unit and position data of the mobile unit acquired with the indoor location system being stored in the manufacturing control system, acquiring image data of a processing planspecific object for identifying the processing plan to be assigned with the manufacturing control system, and assigning the identified processing plan to the mobile unit data set of the mobile unit in the manufacturing control system. WO2007/062441 A1 relates to a position-variable switching device, especially a floor switch, that is connected to a control device optionally of a production device, especially a folding press, in a preferably wireless manner, for signal and/or data transmission. A positioning device is provided for the position variation as required, said positioning device at least comprising a detection device and a progression device formed by a chassis provided with a drive device and at least one progression element.

It is the object of the invention to specify a control device for a technical installation and a method for controlling at least one technical installation with a control device, by which safety is promoted when controlling the technical installation.

This object is achieved by a control device according to claim 1, a technical installation according to claim 14, a use according to claim 16 and a method for controlling at least one technical installation according to claim 17.

One embodiment of the invention relates to a control device for at least one technical installation, in particular for at least one machine tool, in particular a bending machine, having at least one mobile control unit for controlling the at least one technical installation; and having at least one supply unit, which can be assigned in a fixed manner to the technical installation and can be connected thereto in an energy- and signal-transmitting manner, for supplying the at least one mobile control unit with energy; wherein the at least one mobile control unit and the at least one supply unit have a device for wireless energy transmission with a transmission frequency within a predetermined distance between the supply unit and the mobile control unit and for wireless transmission of a safety protocol in the course of the energy transmission. The control unit includes a safety mat and/or a foot control element, wherein the supply unit is contained in the safety mat and/or in the foot control element and/or is configured as such.

The control device enables the at least one mobile control unit to be supplied with energy and a safety protocol and, optionally, with other data wirelessly and at a precisely definable location. Since only in the case of wireless energy transmission to the mobile control unit, the safety protocol is also transmitted and executed wirelessly, thus enabling control of the installation, the safety of the technical installation is promoted. Since the supply unit can be assigned to the installation in a fixed location, it is not part of the installation and/or not integrated into the installation. The supply unit is thus provided as a separate unit that can be connected to the installation for energy and signal transmission. Therefore, the mobile control unit can be located and/or operated at a distance from the technical installation. This additionally promotes the safety of the technical installation, especially the safety of the operators. To further increase this effect, the supply unit can additionally be arranged and/or operated at a distance from the technical installation.

In addition, in the course of wireless energy transmission from the fixed supply unit to the mobile control unit, its location can be determined. Furthermore, the energy, data as well as safety protocol transmission between the supply unit and the mobile control unit is realized without interfering wiring that may compromise safety. In addition, safety during operation of the technical installation is increased by the fact that the at least one mobile control unit can only be supplied with energy and the safety protocol only be executed within the predetermined distance from the at least one supply unit. Incorrect operation of neighbouring technical installations, such as machine tools, can thus be avoided, since the mobile control unit only functions within the predetermined distance from its assigned supply unit and thus neighbouring, unassigned technical installations cannot be controlled. This reduces the risk of confusion. Confusion of emergency stop devices of neighbouring technical installations can also be avoided. This is because the mobile control unit and its emergency stop device are supplied with energy and, for example, an emergency stop switch provided on the mobile control unit is illuminated only within the predetermined distance from its assigned supply unit.

The control device of embodiments may therefore increase the safety of safety-related technical installations. In particular, machine safety can be supported according to performance level, by standards for general machine safety and/or, for example, the C standard for hydraulic press brakes (EN12622).

A mobile control unit can be designed to control several technical installations, each with one or more supply units. Furthermore, several mobile control units can be designed to control a technical installation by means of one or more supply units. For example, several mobile control units can be used in a linked manner within the predetermined distance for a technical installation, especially when processing large workpieces, i.e., workpieces with extensive dimensions. For example, the technical installation can be controlled by two operators and both operators must simultaneously operate one mobile control unit each to process the workpiece, which increases safety when operating the technical installation. Furthermore, several mobile control units can be used for several technical installations, whereby, for example, only one mobile control unit is active at a time at a particular technical installation, such as a tool station. In this way, frequent transport of the mobile control unit between different technical installations or tool stations can be avoided.

In the embodiment presented above, the safety protocol may be at least partially tuned to and/or at least partially modulated onto the transmission frequency. In this way, the safety protocol can be easily transmitted together with the energy. Furthermore, the safety protocol can be configured as a sequence of signals, in particular as signals interchangeable between the supply unit and the mobile control unit.

The supply unit may include at least one means for energy transmission and signal exchange. The mobile control unit may include at least one means for energy reception and signal exchange. The predetermined distance may be 0-100 cm, preferably 1-50 cm, particularly preferably 1-10 cm, between the supply unit and the mobile control unit, in particular between the means for energy transmission and signal exchange and the means for energy reception and signal exchange. This distance promotes the safety of the installation.

The supply unit, in particular the means for energy transmission and signal exchange, can be integrated in a safety mat or in a foot switch or foot control element. The control unit includes a safety mat and/or a foot control element, wherein the supply unit, in particular the means for energy transmission and signal exchange, is contained in the safety mat and/or in the foot control element and/or is configured as such. In the case of the safety mat, the function of the step protection can thus be combined with the other advantages of the mobile control unit. The supply unit can be provided as a separate unit that can be connected to the installation for energy and signal transmission. In one example, the supply unit may be integrated into a floor of a factory building.

The supply unit, in particular the means for energy transmission and signal exchange, can be designed to transmit the energy and/or exchange the signals by means of electromagnetic radiation, in particular by means of magnetic induction, radio waves and/or light. Furthermore, the mobile control unit, in particular the means for energy reception and signal exchange, can be designed to receive the energy and/or exchange the signals by means of electromagnetic radiation, in particular by means of magnetic induction, radio waves and/or light. In this way, energy transmission and signal exchange can be reliably realized wirelessly. For example, the supply unit and the mobile control unit may each have at least one electric coil. Embodiments may be configured for energy transmission via inductive coupling, resonant inductive coupling, capacitive coupling, laser, and/or microwaves.

The means for energy reception and signal exchange of the mobile control unit and the means for energy transmission and signal exchange of the supply unit can be tuned or be tunable with one another. Furthermore, the predetermined distance between the supply unit and the mobile control unit may be predetermined by a maximum transmission distance between the transmission units of the device for wireless energy transmission, e.g., a predetermined range of the device for wireless energy transmission or its means for energy transmission and/or energy reception.

At least two supply units, in particular at least two safety mats, can be connected with one another in a mechanical, energy-transmitting, signal-transmitting and/or data-transmitting manner or be connectable in such manners. Corresponding interfaces can be provided on the supply units for this purpose. For example, multiple safety mats can be connected or be connectable to form a combination, also referred to as a cluster. In this regard, the dimensioning of the supply units can be adapted to the dimensioning of the mobile control unit and/or to the dimensioning of the at least one technical installation. Further, the resulting dimensioning of the connected or connectable supply units may be adapted to the dimensioning of the at least one technical installation. The dimensioning of the supply units and/or the predetermined distance can further be selected in such a way that, by means of those of the connected supply units which are located within the predetermined distance from the mobile control unit, the energy from one of the technical installations can be or is transmitted wirelessly to the mobile control unit. For example, in a cluster of connected safety mats, the energy and safety protocol transmission can be performed only at the location of the mobile control unit to be supplied, i.e., via the safety mat(s) at whose predetermined distance the mobile control unit is located. In this regard, the safety mats located outside the predetermined distance can be inactive or switched to a standby state.

Furthermore, the safety protocol may include a one-way or two-way authentication and/or a one-way or two-way functionality check of the supply unit, the mobile control unit and/or the technical installation. In this way, safety is additionally promoted in relation to the operation of the technical installation. In particular, the mutual authentication of the supply unit, the mobile control unit and/or the technical installation, e.g., at the beginning of the wireless energy transmission, reduces the risk of confusion, especially with regard to neighbouring technical installations.

At least one element selected from the at least one supply unit and the at least one mobile control unit can have a control module that is connected or can be connected to a central controller of the technical installation in a data-transmitting manner, in particular with a wireless and/or wired connection. In this regard, the at least one supply unit and/or the at least one mobile control unit can be designed, in particular by means of the respective control module, for wireless energy transmission from one of the technical installations to the mobile control unit only on condition that the mobile control unit is arranged within the predetermined distance from the supply unit. Furthermore, the at least one supply unit and/or the at least one mobile control unit may be designed, in particular by means of the respective control module, for wireless transmission of at least part of the energy from one of the technical installations to the mobile control unit only on condition that the mobile control unit is registered with the central controller of one of the technical installations. This promotes safety when operating the technical installation.

The at least one supply unit may be configured to switch to a de-energized state and/or standby state in the absence of wireless energy transmission and/or in the absence of wireless signal transmission and/or outside the predetermined distance from the mobile control unit. At least one element selected from the at least one supply unit, the at least one mobile control unit, the control module of the supply unit, and the control module of the at least one mobile control unit may be configured to determine the connection of the at least one mobile control unit to the technical installation during wireless energy transmission to the mobile control unit and/or wireless signal transmission to the mobile control unit. In this manner, not only the operational readiness and/or functionality, but also the location of the mobile control unit can be determined.

One embodiment of the invention further relates to a technical installation, machine tool or bending machine, in particular a safety-related technical installation, machine tool or bending machine, with a control device according to one of the embodiments and configurations described above. The supply unit for supplying the at least one mobile control unit with energy can be assigned or is assignable to the technical installation, machine tool or bending machine in a fixed location and can be connected or is connectable to the installation, machine tool or bending machine in an energy-transmitting and signal-transmitting manner.

A further embodiment of the invention relates to a use of a control device according to one of the embodiments and configurations described above for controlling at least one technical installation, machine tool or bending machine, in particular a safety-related technical installation, machine tool or bending machine.

Another embodiment of the invention relates to a method for controlling at least one technical installation with a control device according to one of the above embodiments and configurations, in particular for controlling at least one machine tool or at least one bending machine, the control device having at least one mobile control unit for controlling the at least one technical installation and at least one supply unit for supplying the at least one mobile control unit with energy; the supply unit being assigned to the technical installation in a fixed manner and being connected thereto in an energy-transmitting and signal-transmitting manner; wherein the method comprises the following: Supplying energy to at least one of the mobile control units, wherein within a predetermined distance between one of the supply units and the mobile control unit, the energy is wirelessly transmitted at a transmission frequency, and wherein in the course of the energy transmission, a safety protocol is wirelessly transmitted.

The at least one technical installation can be controlled via the supply unit using the mobile control unit in a connected manner. As a safety protocol, signals can be exchanged wirelessly between the supply unit and the mobile control unit. The safety protocol can be transmitted as a sequence of signals. The safety protocol can be at least partially tuned to and/or at least partially modulated onto the transmission frequency.

In all embodiments, the supply unit can be provided as a separate unit from the installation and/or from the mobile control unit. Furthermore, in all embodiments, the supply unit and/or the mobile control unit may each be or become arranged and/or be operated at a distance from the installation.

With the above-mentioned technical installation, the use of a control device and/or the method for controlling at least one technical installation, the same advantages, operating modes and functions can be realized as with the embodiments and configurations of the control device for at least one technical installation, in particular with identical and/or analogous features.

Further features and advantages arise from the following description of embodiments, the figures, and the dependent claims.

All non-mutually exclusive features of embodiments described here can be combined with one another. The same elements of the embodiments are given the same reference symbols in the following description. Embodiments of the invention are now described in more detail using the following examples with reference to figures, without intending any limitation thereby. In the figures:
- Fig. 1: schematically shows an example of a control device 10 for at least one technical installation, according to embodiments of the invention;
- Figs. 2a und 2b: each schematically show the control device 10 with a technical installation 100; and
- Figs. 3a to 3c: schematically show an example of a method for controlling at least one technical installation, according to embodiments of the invention.

The term "supply unit that can be assigned to the technical installation in a fixed manner" means that the supply unit can be assigned to the technical installation in a fixed manner, e.g., can be provided in a fixed location on the technical installation and/or can be identified as being provided in a fixed manner on the technical installation by signals or data transmission. The expression "is assigned to the technical installation in a fixed manner" means that the supply unit is provided in a fixed location on the technical installation and/or is identified as being provided in a fixed manner on the technical installation. The term "for wireless energy transmission with a transmission frequency within a predetermined distance" means that the device for wireless energy transmission enables wireless energy transmission with a transmission frequency and wireless transmission of a safety protocol and optional further data in the course of the energy transmission when the supply unit and the mobile control unit, in particular their means for energy transmission and their means for energy reception, are at least partially within the predetermined distance. In the following description of embodiments and examples, the terms technical installation and machine are used synonymously. Also, embodiments of the invention are described below with reference to a bending machine as a technical installation or machine, without limiting the invention thereto. Furthermore, the mobile control unit is also referred to as a control unit in the following. Furthermore, where value ranges are described here, the specification of a broad range with narrower alternative or preferred ranges is also considered to disclose ranges that can be formed by any combination of specified lower range limits and specified upper range limits. The terms "size" or "dimensioning" are to be understood as referring to the "dimensions" in the present case.

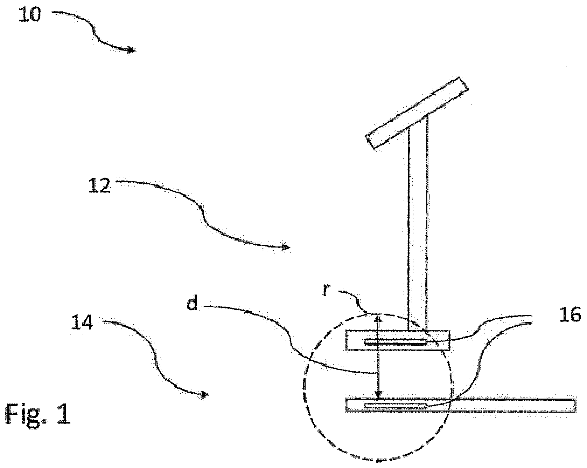

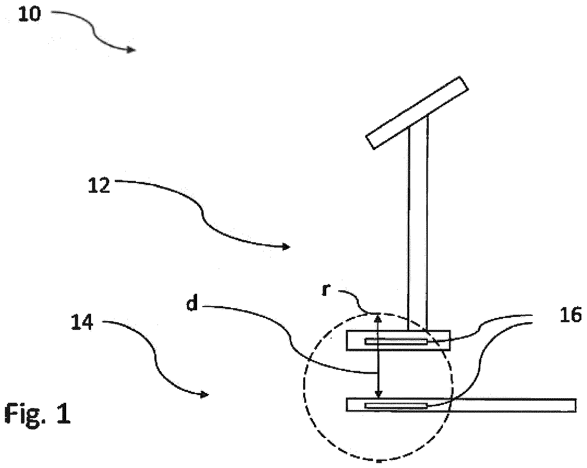

Fig. 1 schematically shows a control device 10 for a technical installation as an example. The control device 10 has a mobile control unit 12 for controlling the technical installation and a supply unit 14 for supplying the mobile control unit 12 with energy.

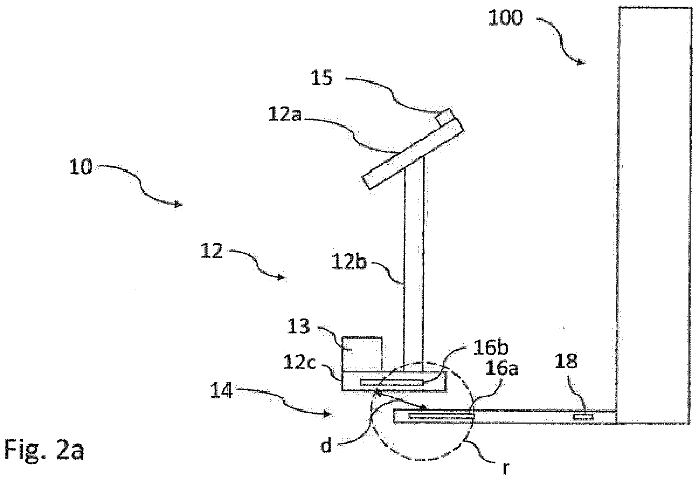

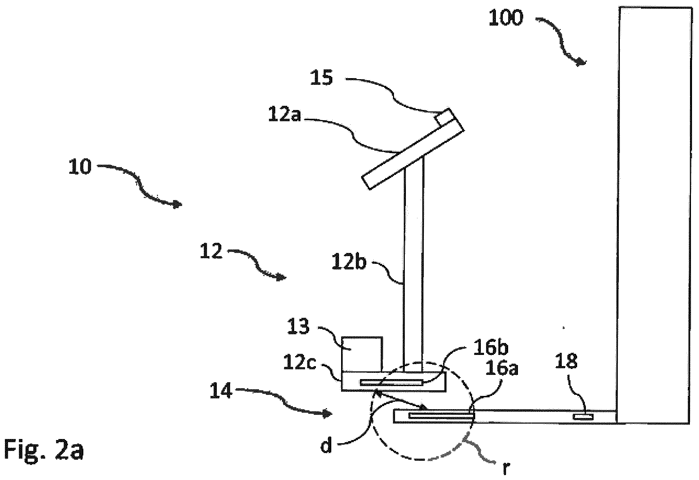

As shown in Fig. 2a, in the present example, the mobile control unit 12 includes a display and input device 12a, such as a touch screen, at its upper end, a base element 12c at its lower end, and a stand element 12b between the display and input device 12a and the base element 12c. Casters (not shown) may be provided in the base element 12c for moving the mobile control unit 12 on the floor. In the present example, a foot switch 13 is arranged in the base element 12c, which can be actuated by an operator of the technical installation with his foot for controlling the same. Furthermore, an emergency stop switch 15 is provided in the display and input device 12a, which can be actuated by the operator to stop the technical installation in emergency situations.

In examples, the technical installation can be controlled by means of the control device 12 in addition to or as an alternative to the foot switch 13 by means of the display and input device 12a. For example, no foot switch may be provided in the mobile control unit 12, and the technical installation may be controllable solely by means of the display and input device 12a. In other examples, no display and input device 12a may be provided in the mobile control unit 12, and the technical installation may be controllable solely by means of the foot switch 13. In further examples, both the foot switch 13 and the display and input device 12a may be provided in the control device 10 and may each be used individually and/or in combination to control the technical installation.

The control device 10 includes a supply unit 14 for supplying the mobile control unit 12 with energy. In the present example, the supply unit 14 is designed as a floor mat, also referred to as a charging mat 14 in the present case. The supply unit 14 can be designed, for example, as a safety mat and/or ergonomic rubber mat.

As shown in Fig. 1, the mobile control unit 12 and the supply unit 14 have a device 16 for wireless energy transmission with a transmission frequency within a predetermined distance d between the supply unit and the control unit. In the present example, the device 16 for wireless energy transmission with a transmission frequency includes a means 16a for energy transmission and signal exchange and a means 16b for energy reception and signal exchange. In the figures, the predetermined distance d is portrayed in an exemplary manner as the radius of a dashed circle illustrating the spatial extent of a transmission range r of the device for wireless energy transmission, in the present examples of the means 16a for energy transmission and signal exchange. The transmission range r is also referred to just as the range r here.

In the present example, the device 16 has two electric coils 16a and 16b. The coil 16b is arranged in the base element 12c of the control unit 12 in the present case as the means for energy reception and signal exchange, and the coil 16a is arranged in the charging mat 14 as the means for energy transmission and signal exchange.

In embodiments, the energy transmission may be performed by means of magnetic induction with a transmission frequency of some 10 kHz, preferably less than 1 kHz, more preferably in a range of 87 to 250 Hz, and/or with a power of 0.3 to 15 W, preferably 1 to 5 W, more preferably 1 to 3 W. The predetermined distance d (transmission range r) between the charging mat 14 and the mobile control unit 12 may range be from 0 to 100 cm, preferably 0 to 10 cm, more preferably 0 to 2 cm. The predetermined distance d can be defined in particular by the maximum transmission distance between the coils 16a and 16b. In examples, the maximum transmission distance can be less than the diameter of at least one of the coils 16a and 16b. Furthermore, the signal exchange can be performed in the same frequency range as the frequency transmission, e.g., with a transmission speed of up to 2 kilobits per second.

In the present example, coil 16a has a diameter of approximately 50 mm, while coil 16b has a diameter of approximately 40 mm. In other examples, multiple, overlapping coils 16a and/or multiple, overlapping coils 16b may be provided. In the present case, the coil 16a transmits energy to the coil 16b by means of magnetic induction with a transmission frequency in a range of 100 to 200 Hz and with a power of 3 to 4 W, within the predetermined distance d (transmission range r) between the charging mat 14 and the mobile control unit 12 of 0 to 10 cm. Furthermore, the signal exchange in this example is performed in a frequency range from 100 to 150 Hz, with a transmission speed of 1 kilobit per second. In the present example, the mobile control unit 12 is additionally equipped with an accumulator (not shown), also referred to as a battery, in which the transmitted energy can be stored. Alternatively or additionally, at least one capacitor can be provided to store the transmitted energy.

In alternative examples, antennas can be used instead of coils, and the energy and safety protocol can be transmitted using radio waves, for example.

In operation of the present example, as shown in Fig. 2a, the supply unit 14, i.e., the charging mat 14, is or will be assigned to a technical installation 100 in a fixed manner and is connected to this installation in an energy-transmitting and data-transmitting manner with a wireless or wired connection. The supply unit 14, or charging mat 14, is not part of the installation 100. The charging mat 14 is provided as a separate unit that can be connected to the installation in an energy-transmitting and signal-transmitting manner. By way of example, the supply unit 14 has a control module 18 that is connected to a central controller of the technical installation 100 in a data-transmitting manner. Further, an energy supply (not shown) of the supply unit 14 coupled to the coil 16a is connected to the energy supply (not shown) of the technical installation 100. To control the technical installation 100, the mobile control unit 12 with its coil 16b is positioned within the predetermined distance d, i.e., within the transmission range r, in the vicinity of the supply unit 14. Due to this, the coil 16b is within the maximum transmission distance of the coil 16a, i.e., at least partially within the range r. The mobile control unit 12 is supplied with energy by means of the coils 16a and 16b, whereby within the predetermined distance d between the supply unit 14 and the mobile control unit 12, the energy is transmitted wirelessly at the transmission frequency from the coil 16a to the coil 16b. In the course of the energy transmission, a safety protocol is transmitted wirelessly. In addition, the mobile control unit 12 can be localized in the process, i.e., its location can be determined.

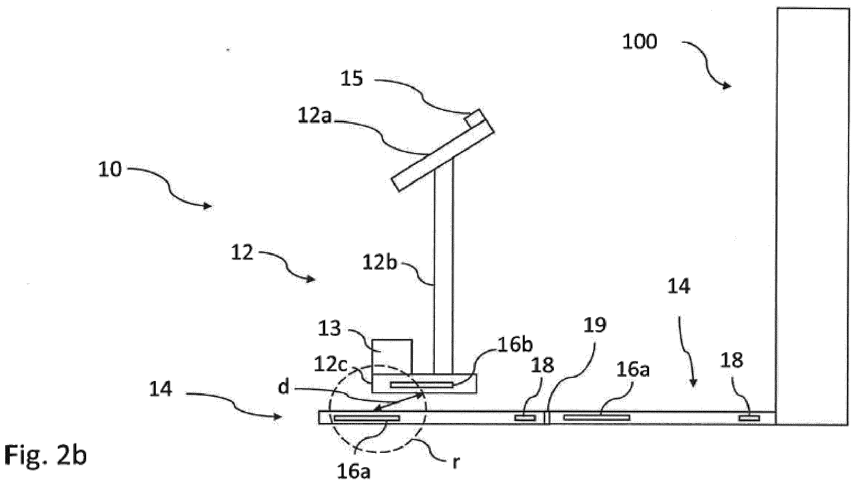

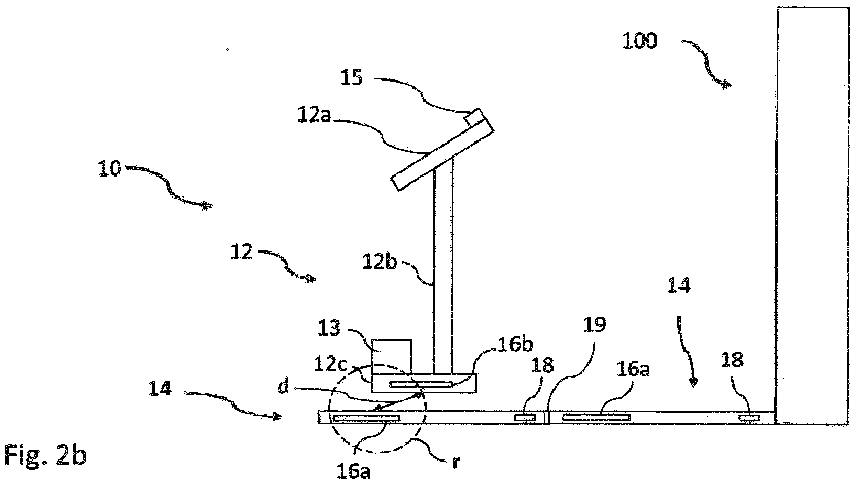

Fig. 2b illustrates that, in some examples, the supply unit 14 is modularly expandable by coupling with additional supply units 14. Multiple supply units 14 may be connected to each other in a direction perpendicular to the technical installation 100 to form a cluster, as shown in Fig. 2b using two supply units 14. For this purpose, the supply units 14 can be connected with one another in a mechanical, energy-transmitting, signal-transmitting and/or data-transmitting manner or be connectable in such manners, for example by means of at least one interface 19. Alternatively or additionally, multiple supply units 14 may be coupled in a direction parallel to the technical installation 100, which may be 1 to 8 m long in the case of bending machines, for example. In this way, the size, i.e., the dimensions, of the at least one supply unit 14 is/are adaptable to the size, i.e., the dimensions, of the technical installation 100. The energy and the safety protocol and optionally other data are transmitted during operation by that/those supply unit(s) 14 within whose range r the control unit 12 is located. Thus, in the example of Fig. 2b, if the control device 12 is moved above the cluster of supply units 14 from the predetermined distance d to one of the supply units 14, the energy and data exchange automatically continues with that supply unit 14 or those supply units 14 relative to which the control unit 12 is located within the respective predetermined distance d.

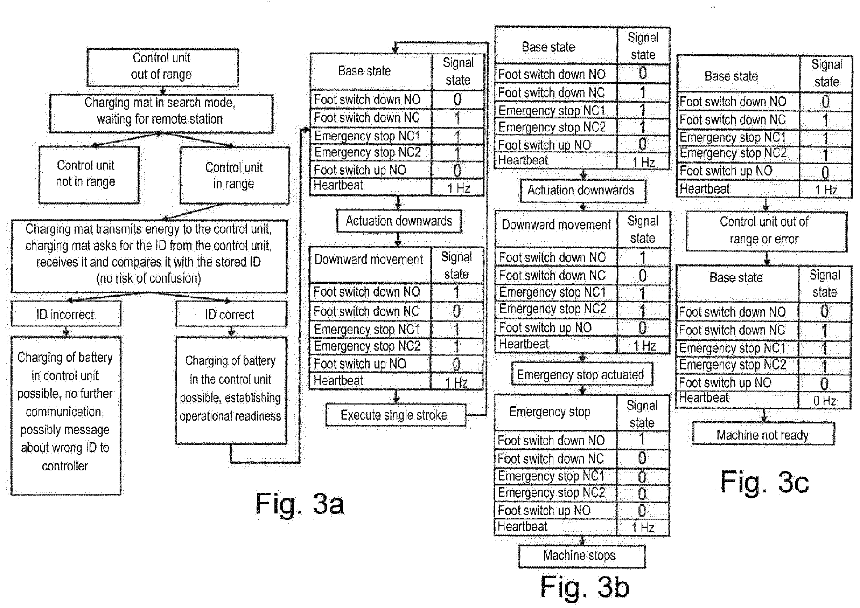

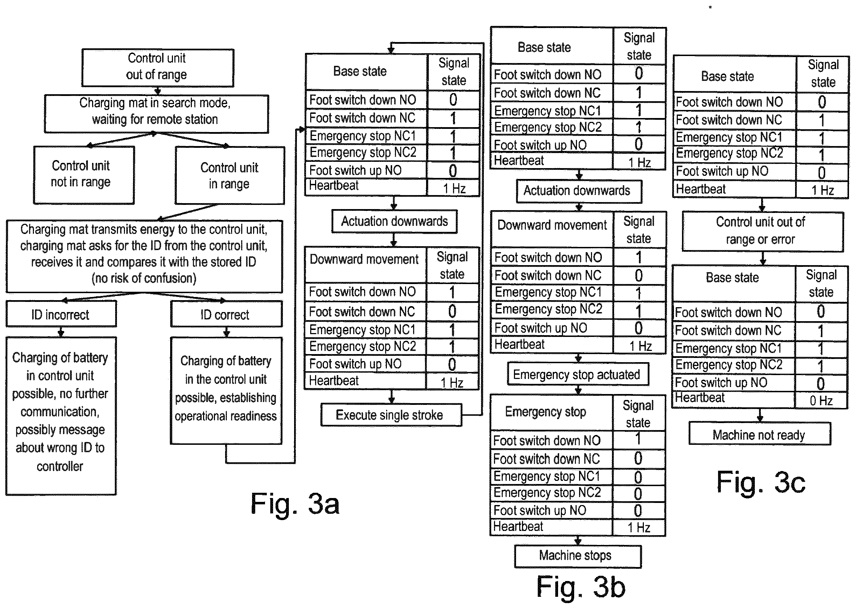

Figs. 3a to 3c schematically show an example of a method for controlling the technical installation 100 with the control device 10. In the case of this example, the technical installation 100 is a bending machine that is actuated, for example, by moving its movable upper beam, on which a bending tool is provided, downward for bending a workpiece. By means of the mobile control unit 12, at least the commands for moving the upper beam downward and upward and for the emergency stop can be triggered in order to control the bending machine.

In the present example, the safety protocol includes requesting and checking an identification number ID of the control unit 12. Optionally, as shown in Figs. 3a to 3c, the connection establishment and/or control signals can be at least partially integrated into the safety protocol, in particular signal states and signal sequences for the foot switch 13 and/or the emergency stop switch 15 and/or for testing a heartbeat of the control unit 12. The safety protocol and optionally other signals can be modulated onto the transmission frequency at least partially with a natural frequency in the same frequency range as the energy transmission.

Fig. 3a illustrates a connection establishment, also called handshake/pairing, between the mobile control unit 12 and the supply unit 14 at the beginning of the method. As illustrated in Fig. 3a, the control unit 12 is initially located outside the predetermined distance d from the supply unit 14, in this case the charging mat 14. This means that the control unit 12 is positioned outside the transmission range r to the charging mat 14. The charging mat 14 is in search mode, in which it waits for the control unit 12 as a remote station. As long as the control unit 12 is not within range r and the coils 16a and 16b are not within their maximum transmission distance, the bending machine 100 cannot be operated.

When the control unit 12, in particular its coil 16b, is transported at least partially to within the predetermined distance d from the charging mat 14, the control unit is within the range r of the charging mat 14. The charging mat 14 then transmits energy with its coil 16a to the coil 16b of the control unit 12. The safety protocol is executed. The charging mat 14 requests the ID of the control unit 12 from the control unit, receives the ID, and matches the ID with one or more stored IDs indicating one or more target IDs. In the present example, if the ID transmitted by the control unit 12 is incorrect, i.e., does not match one of the desired target IDs, energy may be transmitted at least briefly to the control unit 12 and charged into the battery of the control unit, but no further communication related to the operation of the bending machine 100 takes place between the control unit 12 and the charging mat 14. In this case, the control module 18 of the charging mat 14 can be used to report to the central controller of the bending machine 100 the receipt of an incorrect ID and/or also the location of the control unit 12 with the incorrect ID, but no operational readiness of the bending machine 100 is established.

If the ID transmitted by the control unit 12 is correct and matches the target ID, the charging mat 14 is connected to the desired control unit 12 in an energy-transmitting and data-transmitting manner. This makes it possible to assign the control unit 12 to the bending machine 100 in accordance with the intended purpose and without risk of confusion, so that an undesired assignment of the control unit 12 to a neighbouring bending machine, for example, can be avoided. The control unit 12 is supplied with energy and its battery is charged. Furthermore, the operational readiness of the bending machine 100 is established and operation of the bending machine 100 with the control unit 12 of the correct ID is enabled.

As shown in the example of Fig. 3a, after the connection is established, the bending machine 100 can be operated with the foot switch 13, starting from a base state. In the base state, the signal states are foot switch down (downward) NO (normally open) 0 and foot switch down NC (normally closed) 1. Two signal states NC 1 and NC 2 for the emergency stop switch 15 are each set to 1 in the base state and the signal state foot switch up (upward) NO is set to 0. In the present example, a heartbeat of the control unit 12 is detected by the supply unit 14 within the range r. The heartbeat of the control unit 12 corresponds to 1 Hz in the base state. Now the foot switch 13 is actuated by the operator and a downward movement of the upper beam of the bending machine is commanded. This switches the signal states foot switch down NO to 1 and NC to 0. A single stroke of the upper beam is performed. Eventually, the machine returns to the base state.

Fig. 3b shows how an emergency stop of the bending machine 100 can be triggered during the stroke of Fig. 3a. Here, for example during the downward movement of the upper beam, the emergency stop switch 15 on the display and input device 12a is actuated. As a result, the signal states emergency stop NC 1 and NC 2 are each set to 0, which stops the bending machine 100.

Fig. 3c illustrates a malfunction of the connection between the control unit 12 and the charging mat 14. The bending machine 100 is, for example, in its base state. If the transmission of energy between the charging mat 14 and the control unit 12 is interrupted, e.g., because of a fault, a malfunction or because the control unit 12 is moved out of the range r to the charging mat 14, the signal state of the heartbeat of the control unit 12 changes to 0 Hz. This terminates the operational readiness of the bending machine 100.

Finally, it should be noted that the description of the invention and the exemplary embodiments are not to be understood as limiting in terms of a particular physical realisation of the invention.

The scope of protection of the present invention is given by the claims and is not limited by the features illustrated in the description or shown in the figures.

### List of reference symbols

- 10: Control device
- 12: Mobile control unit
- 12a: Display and input device
- 12b: Stand element
- 12c: Base element
- 13: Foot switch
- 14: Supply unit
- 15: Emergency stop switches
- 16: Device for wireless energy transmission
- 16a: Means for energy transmission and signal exchange; electric coil
- 16b: Means for energy reception and signal exchange; electric coil
- 18: Control module
- 19: Interface
- 100: Technical installation
- d: Predetermined distance between the supply unit and the mobile control unit
- r: Transmission range

## Claims

1. A control device (10) for at least one technical installation (100), in particular for at least one machine tool, in particular a bending machine,
having at least one mobile control unit (12) for controlling the at least one technical installation (100); and
having at least one supply unit (14), which can be assigned in a fixed manner to the technical installation (100) and can be connected thereto in an energy- and signal-transmitting manner, for supplying the at least one mobile control unit (12) with energy;
wherein the at least one mobile control unit (12) and the at least one supply unit (14) have a device (16) for wireless energy transmission with a transmission frequency within a predetermined distance (d) between the supply unit (14) and the mobile control unit (12) and for wireless transmission of a safety protocol in the course of the energy transmission;
**characterized in that**
the control device further includes a safety mat and/or a foot control element, wherein the supply unit (14) is contained in the safety mat and/or in the foot control element and/or is configured as such.

2. The control device according to claim 1,
wherein the safety protocol is at least partially tuned to and/or at least partially modulated onto the transmission frequency; and/or
wherein the safety protocol is configured as a sequence of signals, in particular as signals interchangeable between the supply unit (14) and the mobile control unit (12) .

3. The control device according to claim 1 or 2,
wherein the supply unit (14) has at least one means (16a) for energy transmission and signal exchange; and/or wherein the mobile control unit (12) comprises at least one means (16b) for energy reception and signal exchange; and/or
wherein the predetermined distance (d) between the supply unit (14) and the mobile control unit (12), in particular between the means (16a) for energy reception and signal exchange and the means (16b) for energy reception and signal exchange, is 0-100 cm, preferably 1-50 cm, particularly preferably 1-10 cm.

4. The control device according to any one of the preceding claims,
wherein the supply unit (14), in particular the means for energy transmission and signal exchange, is designed for transmitting the energy and/or exchanging the signals by means of electromagnetic radiation, in particular by means of magnetic induction, radio waves and/or light;
and/or wherein the mobile control unit (12), in particular the means for energy reception and for signal exchange, is designed for receiving the energy and/or exchanging the signals by means of electromagnetic radiation, in particular by means of magnetic induction, radio waves and/or light.

5. The control device according to claim 4,
wherein the means (16b) for energy reception and signal exchange of the mobile control unit (12) and the means (16a) for energy transmission and signal exchange of the supply unit (14) are tuned or are tunable with one another.

6. The control device according to any one of the preceding claims, wherein at least two supply units (14), in particular at least two safety mats, are connected with one another in a mechanical, energy-transmitting, signal-transmitting and/or data-transmitting manner or are connectable in such manners.

7. The control device according to claim 6,
wherein the dimensioning of the supply units (14) is adapted to the dimensioning of the mobile control unit (12) and/or to the dimensioning of the at least one technical installation (100);
and/or wherein the resulting dimensioning of the connected or connectable supply units (14) is adapted to the dimensioning of the at least one technical installation (100).

8. The control device according to one of claims 6 and 7,
wherein the dimensioning of the supply units (14) and/or the predetermined distance (d) is selected in such a way that, by means of those connected supply units (14) which are located within the predetermined distance (d) from the mobile control unit (12), the energy from one of the technical installations (100) can be or is transmitted wirelessly to the mobile control unit (12).

9. The control device according to any one of the preceding claims,
wherein the safety protocol includes a one-way or two-way authentication and/or a one-way or two-way functionality check of the supply unit (14), the mobile control unit (12) and/or the technical installation (100).

10. The control device according to any one of the preceding claims,
wherein at least one element selected from the at least one supply unit (14) and the at least one mobile control unit (12) has a control module (18) which is connected or can be connected to a central controller of the technical installation (100) in a data-transmitting manner, in particular with a wireless and/or wired connection.

11. The control device according to any one of claims 9 and 10,
wherein the at least one supply unit (14) and/or the at least one mobile control unit (12) is designed, in particular by means of the respective control module (18), for wireless energy transmission from one of the technical installations (100) to the mobile control unit (12) only on condition that the mobile control unit (12) is arranged within the predetermined distance (d) from the supply unit (14);
and/or wherein the at least one supply unit (14) and/or the at least one mobile control unit (12) is designed, in particular by means of the respective control module (18), for wireless transmission of at least part of the energy from one of the technical installations (100) to the mobile control unit only on condition that the mobile control unit (12) is registered with the central controller of one of the technical installations (100).

12. The control device according to any one of the preceding claims,
wherein the at least one supply unit (14) is designed for switching to a de-energized state and/or standby state in the absence of a wireless energy transmission and/or in the absence of a wireless signal transmission and/or outside the predetermined distance (d) from the mobile control unit (12); and/or
wherein at least one element selected from the at least one supply unit (14) and the at least one mobile control unit (12) is configured to determine the connection of the at least one mobile control unit (12) to the technical installation (100) during wireless energy transmission to the mobile control unit (12) and/or wireless signal transmission to the mobile control unit (12) .

13. The control device according to any one of claims 10 to 12,
wherein at least one element selected from the control module (18) of the supply unit and the control module (18) of the at least one mobile control unit is configured to determine the connection of the at least one mobile control unit (12) to the technical installation (100) during wireless energy transmission to the mobile control unit (12) and/or wireless signal transmission to the mobile control unit (12).

14. A technical installation (100), machine tool or bending machine, having a control device (10) according to any one of the preceding claims.

15. The technical installation (100) according to claim 14, wherein the supply unit (14) for supplying the at least one mobile control unit (12) with energy can be assigned or is assigned to the technical installation (100), machine tool or bending machine in a fixed location and can be connected or is connected to the installation, machine tool or bending machine in an energy-transmitting and signal-transmitting manner.

16. A use of a control device according to any one of claims 1 to 13 for controlling at least one technical installation (100), machine tool or bending machine.

17. A method for controlling at least one technical installation with a control device (10) according to any one of claims 1 to 13, in particular for controlling at least one machine tool or at least one bending machine, the control device (10) having at least one mobile control unit (12) for controlling the at least one technical installation (100) and at least one supply unit (14) for supplying the at least one mobile control unit (12) with energy; the supply unit (14) being assigned to the technical installation (100) in a fixed manner and being connected thereto in an energy-transmitting and signal-transmitting manner; the method comprising:
supplying energy to at least one of the mobile control units (12), wherein within a predetermined distance (d) between one of the supply units (14) and the mobile control unit (12), the energy is wirelessly transmitted at a transmission frequency, and
wherein in the course of the energy transmission, a safety protocol is wirelessly transmitted.

18. The method according to claim 17,
wherein the at least one technical installation (100) is controlled via the supply unit (14) by the mobile control unit (12); and/or
wherein signals are wirelessly exchanged between the supply unit (14) and the mobile control unit (12) as a safety protocol; and/or
wherein the safety protocol is transmitted as a sequence of signals; and/or
wherein the safety protocol is at least partially tuned to and/or at least partially modulated onto the transmission frequency.

## Patentansprüche

1. Bedienvorrichtung (10) für zumindest eine technische Anlage (100), insbesondere für zumindest eine Werkzeugmaschine, insbesondere eine Biegemaschine, mit zumindest einer mobilen Bedieneinheit (12) zur Bedienung der zumindest einen technischen Anlage (100); und mit zumindest einer Versorgungseinheit (14), die der technischen Anlage (100) fest zugeordnet werden kann und mit dieser energie- und signalübertragend verbunden werden kann, um die zumindest eine mobile Bedieneinheit (12) mit Energie zu versorgen;
wobei die zumindest eine mobile Bedieneinheit (12) und die zumindest eine Versorgungseinheit (14) eine Vorrichtung (16) zur drahtlosen Energieübertragung mit einer Übertragungsfrequenz innerhalb einer vorgegebenen Entfernung (d) zwischen der Versorgungseinheit (14) und der mobilen Bedieneinheit (12) und zur drahtlosen Übertragung eines Sicherheitsprotokolls im Zuge der Energieübertragung aufweisen;
**dadurch gekennzeichnet, dass**
die Bedienvorrichtung ferner eine Sicherheitsmatte und/oder ein Fußbedienelement einschließt, wobei die Versorgungseinheit (14) in der Sicherheitsmatte und/oder im Fußbedienelement enthalten und/oder als solche ausgestaltet ist.

2. Bedienvorrichtung nach Anspruch 1,
wobei das Sicherheitsprotokoll zumindest teilweise auf die Übertragungsfrequenz abgestimmt und/oder zumindest teilweise auf diese moduliert ist; und/oder
wobei das Sicherheitsprotokoll als Abfolge von Signalen, insbesondere als zwischen der Versorgungseinheit (14) und der mobilen Bedieneinheit (12) austauschbare Signale, ausgestaltet ist.

3. Bedienvorrichtung nach Anspruch 1 oder 2,
wobei die Versorgungseinheit (14) zumindest ein Mittel (16a) zur Energieübertragung und zum Signalaustausch aufweist; und/oder
wobei die mobile Bedieneinheit (12) zumindest ein Mittel (16b) zum Energieempfang und zum Signalaustausch umfasst; und/oder
wobei die vorgegebene Entfernung (d) zwischen der Versorgungseinheit (14) und der mobilen Bedieneinheit (12), insbesondere zwischen dem Mittel (16a) zum Energieempfang und Signalaustausch und dem Mittel (16b) zum Energieempfang und Signalaustausch, 0-100 cm, bevorzugt 1-50 cm, besonders bevorzugt 1-10 cm, beträgt.

4. Bedienvorrichtung nach einem der vorhergehenden Ansprüche,
wobei die Versorgungseinheit (14), insbesondere das Mittel zur Energieübertragung und zum Signalaustausch, zur Übertragung der Energie und/oder zum Austausch der Signale mittels elektromagnetischer Strahlung, insbesondere mittels magnetischer Induktion, Radiowellen und/oder Licht konstruiert ist;
und/oder wobei die mobile Bedieneinheit (12), insbesondere das Mittel zum Energieempfang und zum Signalaustausch, zum Empfang der Energie und/oder zum Austausch der Signale mittels elektromagnetischer Strahlung, insbesondere mittels magnetischer Induktion, Radiowellen und/oder Licht konstruiert ist.

5. Bedienvorrichtung nach Anspruch 4,
wobei das Mittel (16b) zum Energieempfang und Signalaustausch der mobilen Bedieneinheit (12) und das Mittel (16a) zur Energieübertragung und zum Signalaustausch der Versorgungseinheit (14) aufeinander abgestimmt bzw. abstimmbar sind.

6. Bedienvorrichtung nach einem der vorhergehenden Ansprüche, wobei zumindest zwei Versorgungseinheiten (14), insbesondere zumindest zwei Sicherheitsmatten, mechanisch, energieübertragend, signalübertragend und/oder datenübertragend miteinander verbunden sind oder auf solche Weise verbindbar sind.

7. Bedienvorrichtung nach Anspruch 6,
wobei die Dimensionierung der Versorgungseinheiten (14) an die Dimensionierung der mobilen Bedieneinheit (12) und/oder an die Dimensionierung der zumindest einen technischen Anlage (100) angepasst ist;
und/oder wobei die resultierende Dimensionierung der verbundenen oder verbindbaren Versorgungseinheiten (14) an die Dimensionierung der zumindest einen technischen Anlage (100) angepasst ist.

8. Bedienvorrichtung nach einem der Ansprüche 6 und 7,
wobei die Dimensionierung der Versorgungseinheiten (14) und/oder der vorgegebenen Entfernung (d) derart gewählt ist, dass mittels jener verbundenen Versorgungseinheiten (14), die sich innerhalb der vorgegebenen Entfernung (d) von der mobilen Bedieneinheit (12) befinden, die Energie aus einer der technischen Anlagen (100) drahtlos an die mobile Bedieneinheit (12) übertragen wird oder übertragen werden kann.

9. Bedienvorrichtung nach einem der vorhergehenden Ansprüche,
wobei das Sicherheitsprotokoll eine Einwege- oder Zweiwege-Authentifizierung und/oder eine Einwege- oder Zweiwege-Funktionsprüfung der Versorgungseinheit (14), der mobilen Bedieneinheit (12) und/oder der technischen Anlage (100) einschließt.

10. Bedienvorrichtung nach einem der vorhergehenden Ansprüche,
wobei zumindest ein Element, ausgewählt aus der zumindest einen Versorgungseinheit (14) und der zumindest einen mobilen Bedieneinheit (12), ein Bedienmodul (18) aufweist, das mit einer zentralen Bedienung der technischen Anlage (100) datenübertragend verbunden ist oder verbunden werden kann, insbesondere mit einer drahtlosen und/oder drahtgebundenen Verbindung.

11. Bedienvorrichtung nach einem der Ansprüche 9 und 10,
wobei die zumindest eine Versorgungseinheit (14) und/oder die zumindest eine mobile Bedieneinheit (12), insbesondere mittels des jeweiligen Bedienmoduls (18), zur drahtlosen Energieübertragung von einer der technischen Anlagen (100) an die mobile Bedieneinheit (12) nur unter der Bedingung, dass die mobile Bedieneinheit (12) innerhalb der vorgegebenen Entfernung (d) von der Versorgungseinheit (14) angeordnet ist, konstruiert ist;
und/oder wobei die zumindest eine Versorgungseinheit (14) und/oder die zumindest eine mobile Bedieneinheit (12), insbesondere mittels des jeweiligen Bedienmoduls (18), zur drahtlosen Übertragung zumindest eines Teils der Energie von einer der technischen Anlagen (100) an die mobile Bedieneinheit nur unter der Bedingung, dass die mobile Bedieneinheit (12) bei der zentralen Bedienung einer der technischen Anlagen (100) angemeldet ist, konstruiert ist.

12. Bedienvorrichtung nach einem der vorhergehenden Ansprüche,
wobei die zumindest eine Versorgungseinheit (14) dazu konstruiert ist, bei fehlender drahtloser Energieübertragung und/oder bei fehlender drahtloser Signalübertragung und/oder außerhalb der vorgegebenen Entfernung (d) von der mobilen Bedieneinheit (12) in einen stromlosen Zustand und/oder Standby-Zustand umzuschalten; und/oder
wobei zumindest ein Element, ausgewählt aus der zumindest einen Versorgungseinheit (14) und der zumindest einen mobilen Bedieneinheit (12), dazu ausgelegt ist, die Verbindung der zumindest einen mobilen Bedieneinheit (12) mit der technischen Anlage (100) während der drahtlosen Energieübertragung an die mobile Bedieneinheit (12) und/oder der drahtlosen Signalübertragung an die mobile Bedieneinheit (12) zu bestimmen.

13. Bedienvorrichtung nach einem der Ansprüche 10 bis 12,
wobei zumindest ein Element, ausgewählt aus dem Bedienmodul (18) der Versorgungseinheit und dem Bedienmodul (18) der zumindest einen mobilen Bedieneinheit, dazu ausgelegt ist, die Verbindung der zumindest einen mobilen Bedieneinheit (12) mit der technischen Anlage (100) während der drahtlosen Energieübertragung an die mobile Bedieneinheit (12) und/oder der drahtlosen Signalübertragung an die mobile Bedieneinheit (12) zu bestimmen.

14. Technische Anlage (100), Werkzeugmaschine oder Biegemaschine mit einer Bedienvorrichtung (10) nach einem der vorhergehenden Ansprüche.

15. Technische Anlage (100) nach Anspruch 14, wobei die Versorgungseinheit (14) zur Versorgung der zumindest einen mobilen Bedieneinheit (12) mit Energie der technischen Anlage (100), Werkzeugmaschine oder Biegemaschine an einer festgelegten Position zugeordnet ist oder zugeordnet werden kann und energieübertragend und signalübertragend mit der Anlage, Werkzeugmaschine oder Biegemaschine verbunden werden kann oder verbunden ist.

16. Verwendung einer Bedienvorrichtung nach einem der Ansprüche 1 bis 13 zur Bedienung zumindest einer technischen Anlage (100), Werkzeugmaschine oder Biegemaschine.

17. Verfahren zur Bedienung zumindest einer technischen Anlage mit einer Bedienvorrichtung (10) nach einem der Ansprüche 1 bis 13, insbesondere zur Bedienung zumindest einer Werkzeugmaschine oder zumindest einer Biegemaschine, wobei die Bedienvorrichtung (10) zumindest eine mobile Bedieneinheit (12) zur Bedienung der zumindest einen technischen Anlage (100) und zumindest eine Versorgungseinheit (14) zur Versorgung der zumindest einen mobilen Bedieneinheit (12) mit Energie aufweist; wobei die Versorgungseinheit (14) der technischen Anlage (100) fest zugeordnet und mit dieser energieübertragend und signalübertragend verbunden ist; wobei das Verfahren umfasst:
Versorgen zumindest einer der mobilen Bedieneinheiten (12) mit Energie, wobei die Energie innerhalb einer vorgegebenen Entfernung (d) zwischen einer der Versorgungseinheiten (14) und der mobilen Bedieneinheit (12) drahtlos auf einer Übertragungsfrequenz übertragen wird, und
wobei im Zuge der Energieübertragung ein Sicherheitsprotokoll drahtlos übertragen wird.

18. Verfahren nach Anspruch 17,
wobei die zumindest eine technische Anlage (100) mittels der Versorgungseinheit (14) durch die mobile Bedieneinheit (12) bedient wird; und/oder
wobei Signale drahtlos zwischen der Versorgungseinheit (14) und der mobilen Bedieneinheit (12) als Sicherheitsprotokoll ausgetauscht werden; und/oder
wobei das Sicherheitsprotokoll als Abfolge von Signalen übertragen wird; und/oder
wobei das Sicherheitsprotokoll zumindest teilweise auf die Übertragungsfrequenz abgestimmt und/oder zumindest teilweise auf diese moduliert ist.

## Revendications

1. Dispositif de commande (10) pour au moins une installation technique (100), en particulier pour au moins une machine-outil, en particulier une cintreuse, présentant au moins une unité de commande mobile (12) pour commander l'au moins une installation technique (100) ; et
présentant au moins une unité d'alimentation (14), qui peut être affectée de manière fixe à l'installation technique (100) et peut être connectée à celle-ci d'une manière transmettant de l'énergie et des signaux, pour alimenter en énergie l'au moins une unité de commande mobile (12) ;
dans lequel l'au moins une unité de commande mobile (12) et l'au moins une unité d'alimentation (14) présentent un dispositif (16) pour une transmission d'énergie sans fil avec une fréquence de transmission dans une distance prédéterminée (d) entre l'unité d'alimentation (14) et l'unité de commande mobile (12) et pour une transmission sans fil d'un protocole de sécurité au cours de la transmission d'énergie ;
**caractérisé en ce que**
le dispositif de commande comprend en outre un tapis de sécurité et/ou un élément de commande au pied, dans lequel l'unité d'alimentation (14) est contenue dans le tapis de sécurité et/ou dans l'élément de commande au pied et/ou est conçue comme telle.

2. Dispositif de commande selon la revendication 1,
dans lequel le protocole de sécurité est au moins partiellement accordé et/ou au moins partiellement modulé sur la fréquence de transmission ; et/ou
dans lequel le protocole de sécurité est configuré sous forme d'une séquence de signaux, en particulier sous forme de signaux échangeables entre l'unité d'alimentation (14) et l'unité de commande mobile (12).

3. Dispositif de commande selon la revendication 1 ou 2,
dans lequel l'unité d'alimentation (14) présente au moins un moyen (16a) pour la transmission d'énergie et l'échange de signaux ; et/ou
dans lequel l'unité de commande mobile (12) comprend au moins un moyen (16b) pour la réception d'énergie et l'échange de signaux ; et/ou
dans lequel la distance prédéterminée (d) entre l'unité d'alimentation (14) et l'unité de commande mobile (12), en particulier entre le moyen (16a) pour la réception d'énergie et l'échange de signaux et le moyen (16b) pour la réception d'énergie et l'échange de signaux, est de 0 à 100 cm, de préférence de 1 à 50 cm, de manière particulièrement préférée de 1 à 10 cm.

4. Dispositif de commande selon l'une quelconque des revendications précédentes,
dans lequel l'unité d'alimentation (14), en particulier le moyen pour la transmission d'énergie et l'échange de signaux, est conçue pour transmettre l'énergie et/ou échanger les signaux au moyen d'un rayonnement électromagnétique, en particulier au moyen d'une induction magnétique, d'ondes radio et/ou de lumière ;
et/ou dans lequel l'unité de commande mobile (12), en particulier le moyen pour la réception d'énergie et pour l'échange de signaux, est conçue pour recevoir l'énergie et/ou échanger les signaux au moyen d'un rayonnement électromagnétique, en particulier au moyen d'une induction magnétique, d'ondes radio et/ou de lumière.

5. Dispositif de commande selon la revendication 4,
dans lequel le moyen (16b) pour la réception d'énergie et l'échange de signaux de l'unité de commande mobile (12) et le moyen (16a) pour la transmission d'énergie et l'échange de signaux de l'unité d'alimentation (14) sont accordés ou peuvent être accordés l'un avec l'autre.

6. Dispositif de commande selon l'une quelconque des revendications précédentes, dans lequel au moins deux unités d'alimentation (14), en particulier au moins deux tapis de sécurité, sont connectées entre elles d'une manière mécanique, d'une manière transmettant de l'énergie, d'une manière transmettant des signaux et/ou d'une manière transmettant des données ou peuvent être connectées de ces manières.

7. Dispositif de commande selon la revendication 6,
dans lequel le dimensionnement des unités d'alimentation (14) est adapté au dimensionnement de l'unité de commande mobile (12) et/ou au dimensionnement de l'au moins une installation technique (100) ;
et/ou dans lequel le dimensionnement ainsi obtenu des unités d'alimentation (14) connectées ou pouvant l'être est adapté au dimensionnement de l'au moins une installation technique (100).

8. Dispositif de commande selon l'une des revendications 6 et 7,
dans lequel le dimensionnement des unités d'alimentation (14) et/ou la distance prédéterminée (d) sont choisis de telle sorte que, au moyen des unités d'alimentation (14) connectées qui se trouvent dans la distance prédéterminée (d) de l'unité de commande mobile (12), l'énergie provenant d'une des installations techniques (100) peut être ou est transmise sans fil à l'unité de commande mobile (12).

9. Dispositif de commande selon l'une quelconque des revendications précédentes,
dans lequel le protocole de sécurité comprend une authentification unidirectionnelle ou bidirectionnelle et/ou une vérification de fonctionnalité unidirectionnelle ou bidirectionnelle de l'unité d'alimentation (14), de l'unité de commande mobile (12) et/ou de l'installation technique (100).

10. Dispositif de commande selon l'une quelconque des revendications précédentes,
dans lequel au moins un élément choisi parmi l'au moins une unité d'alimentation (14) et l'au moins une unité de commande mobile (12) présente un module de commande (18) qui est connecté ou peut être connecté à un dispositif de commande central de l'installation technique (100) d'une manière transmettant des données, en particulier avec une connexion sans fil et/ou filaire.

11. Dispositif de commande selon l'une quelconque des revendications 9 et 10,
dans lequel l'au moins une unité d'alimentation (14) et/ou l'au moins une unité de commande mobile (12) sont conçues, en particulier au moyen du module de commande (18) respectif, pour la transmission d'énergie sans fil d'une des installations techniques (100) à l'unité de commande mobile (12) uniquement à condition que l'unité de commande mobile (12) soit agencée dans la distance prédéterminée (d) de l'unité d'alimentation (14) ;
et/ou dans lequel l'au moins une unité d'alimentation (14) et/ou l'au moins une unité de commande mobile (12) sont conçues, en particulier au moyen du module de commande (18) respectif, pour la transmission sans fil d'au moins une partie de l'énergie d'une des installations techniques (100) à l'unité de commande mobile uniquement à condition que l'unité de commande mobile (12) soit enregistrée auprès du dispositif de commande central d'une des installations techniques (100).

12. Dispositif de commande selon l'une quelconque des revendications précédentes,
dans lequel l'au moins une unité d'alimentation (14) est conçue pour passer à un état hors tension et/ou à un état de veille en l'absence de transmission d'énergie sans fil et/ou en l'absence d'une transmission de signaux sans fil et/ou en dehors de la distance prédéterminée (d) de l'unité de commande mobile (12) ; et/ou
dans lequel au moins un élément sélectionné parmi l'au moins une unité d'alimentation (14) et l'au moins une unité de commande mobile (12) est configuré pour déterminer la connexion de l'au moins une unité de commande mobile (12) à l'installation technique (100) pendant une transmission d'énergie sans fil à l'unité de commande mobile (12) et/ou une transmission de signaux sans fil à l'unité de commande mobile (12).

13. Dispositif de commande selon l'une quelconque des revendications 10 à 12,
dans lequel au moins un élément sélectionné parmi le module de commande (18) de l'unité d'alimentation et le module de commande (18) de l'au moins une unité de commande mobile est configuré pour déterminer la connexion de l'au moins une unité de commande mobile (12) à l'installation technique (100) pendant une transmission d'énergie sans fil à l'unité de commande mobile (12) et/ou une transmission de signaux sans fil à l'unité de commande mobile (12).

14. Installation technique (100), machine-outil ou cintreuse, présentant un dispositif de commande (10) selon l'une quelconque des revendications précédentes.

15. Installation technique (100) selon la revendication 14, dans laquelle l'unité d'alimentation (14) pour alimenter en énergie l'au moins une unité de commande mobile (12) peut être affectée ou est affectée à l'installation technique (100), à la machine-outil ou à la cintreuse dans un emplacement fixe et peut être connectée ou est connectée à l'installation, à la machine-outil ou à la cintreuse d'une manière transmettant de l'énergie et transmettant des signaux.

16. Utilisation d'un dispositif de commande selon l'une quelconque des revendications 1 à 13 pour commander au moins une installation technique (100), une machine-outil ou une cintreuse.

17. Procédé de commande d'au moins une installation technique avec un dispositif de commande (10) selon l'une quelconque des revendications 1 à 13, en particulier pour commander au moins une machine-outil ou au moins une cintreuse, le dispositif de commande (10) présentant au moins une unité de commande mobile (12) pour commander l'au moins une installation technique (100) et au moins une unité d'alimentation (14) pour alimenter en énergie l'au moins une unité de commande mobile (12) ; l'unité d'alimentation (14) étant affectée de manière fixe à l'installation technique (100) et étant connectée à celle-ci d'une manière transmettant de l'énergie et transmettant des signaux ; le procédé comprenant :
la fourniture d'énergie à au moins une des unités de commande mobiles (12), dans lequel dans une distance prédéterminée (d) entre une des unités d'alimentation (14) et l'unité de commande mobile (12), l'énergie est transmise sans fil à une fréquence de transmission, et
dans lequel au cours de la transmission d'énergie, un protocole de sécurité est transmis sans fil.

18. Procédé selon la revendication 17,
dans lequel l'au moins une installation technique (100) est commandée par l'intermédiaire de l'unité d'alimentation (14) par l'unité de commande mobile (12) ; et/ou
dans lequel des signaux sont échangés sans fil entre l'unité d'alimentation (14) et l'unité de commande mobile (12) en tant que protocole de sécurité ; et/ou
dans lequel le protocole de sécurité est transmis sous forme d'une séquence de signaux ; et/ou
dans lequel le protocole de sécurité est au moins partiellement accordé et/ou au moins partiellement modulé sur la fréquence de transmission.
